# FASCICULE DE BREVET EUROPEEN

(11) **EP 4 244 135 B1**
(45) Date de publication et mention de la délivrance du brevet: **25.06.2025**
(21) Numéro de dépôt: 21820660.5
(22) Date de dépôt: 09.11.2021
(51) Int. Cl.: B64D 13/06, B64D 41/00

(54) **PROCEDE ET ARCHITECTURE D'ALIMENTATION EN AIR D'UN GROUPE AUXILIAIRE DE PUISSANCE D'AERONEF**
VERFAHREN UND ARCHITEKTUR ZUR VERSORGUNG EINES HILFSTRIEBWERK FÜR EIN LUFTFAHRZEUG MIT LUFT
METHOD AND ARCHITECTURE FOR PROVIDING AIR TO AN AUXILIARY POWERPLANT OF AN AIRCRAFT

(30) Priorité: 12.11.2020 FR 2011608
(43) Date de publication de la demande: 20.09.2023
(73) Titulaire: Safran Power Units, 31200 Toulouse (FR)
(72) Inventeur: BLANC, Bernard, 77550 MOISSY-CRAMAYEL (FR); BONHOMME, Damien, Jacques, Arthur, 77550 MOISSY-CRAMAYEL (FR)
(74) Mandataire: Cabinet Beau de Loménie
(86) Numéro de dépôt international: PCT/FR2021/051981
(87) Numéro de publication internationale: WO 2022/101576

(56) Documents cités:
- WO-A1-2014/118455
- US-A- 5 722 229
- US-A1- 2007 234 731
- US-A1- 2009 025 393
- US-A1- 2019 367 173

## Description

### Domaine Technique

La présente invention se rapporte au domaine des groupes auxiliaires de puissance (APU pour Auxiliary Power Unit) comprenant un générateur de gaz et installés dans les aéronefs et elle concerne plus particulièrement un procédé d'alimentation en air d'un groupe auxiliaire de puissance depuis une cabine pressurisée de l'aéronef et l'architecture associée.

### Technique antérieure

La réinjection d'air cabine dans le compresseur haute pression (HP) d'un l'APU est connue notamment par la demande WO2014118455A1 dont l'objectif est de faciliter l'allumage en altitude de cet APU, l'air cabine étant mélangé à l'air extérieur (air atmosphérique) dans un canal en amont de ce compresseur HP. Différents modes de fonctionnement selon les phases de vol de l'aéronef sont envisagés dont : un mode démarrage, où le compresseur HP est alimenté seulement en air cabine ; un mode stabilisé, où l'APU est alimenté principalement en air extérieur ; et un mode transitoire où l'air extérieur est progressivement injecté dans le canal. Cette solution améliore l'opérabilité de l'APU en facilitant son rallumage. Toutefois, l'alimentation en air depuis la cabine devient un problème notamment en cas de panne du système de ventilation de la cabine et les performances en haute altitude ne sont aucunement améliorées, la capacité de génération de puissance (l'opérabilité) étant en effet réduite en haute altitude.

En outre, avec une telle configuration d'alimentation en air depuis la cabine de l'aéronef, le débit disponible pouvant être injecté dans l'APU est nécessairement limité par celui fourni pour ventiler la cabine. Or, notamment pour des avions commerciaux, ce débit est relativement faible et en contraignant le fonctionnement de l'APU, dégrade donc notablement ses performances.

Le document US5722229 propose l'injection de l'air d'une cabine dans le compresseur haute pression à partir d'un compresseur à charge alimenté en énergie par un moteur électrique.

Les documents US20070234731 et WO2014118455 proposent une architecture selon le préambule de la revendication 5.

Le document US20190367173 propose une architecture d'alimentation en air d'un groupe auxiliaire de puissance à partir de l'air d'une cabine et d'un système d'air pressurisé.

### Exposé de l'invention

La présente invention a donc pour but principal de pallier ces inconvénients en proposant un procédé et une architecture d'alimentation en air permettant d'optimiser les bénéfices de la recirculation d'air cabine sur les performances de l'APU. L'invention a aussi pour but de gagner en consommation spécifique, en particulier à haute altitude.

Ce but est atteint par un procédé d'alimentation en air d'un compresseur haute pression de générateur de gaz auxiliaire depuis une cabine pressurisée d'un aéronef, un compresseur de charge étant entrainé en rotation par un arbre de rotation commun assurant une liaison mécanique entre le compresseur haute pression et une turbine haute pression du générateur de gaz auxiliaire, caractérisé en ce qu'à un premier débit d'air extrait de la cabine est ajouté un deuxième débit d'air issu du compresseur de charge.

Ainsi, en fournissant une source de débit d'air pressurisé complémentaire au compresseur haute pression, la présente invention permet d'augmenter la puissance pouvant être extraite du générateur de gaz auxiliaire tout en facilitant son rallumage en haute altitude et ainsi en augmenter l'efficacité globale sans impacter notablement son installation.

Avantageusement, un troisième débit d'air issu d'un autre compresseur de charge également entrainé en rotation par l'arbre de rotation commun du générateur de gaz auxiliaire est ajouté aux premier et deuxième débits d'air pour alimenter le compresseur haute pression.

De préférence, le premier débit d'air extrait de la cabine est limité à une valeur maximale déterminée et le deuxième débit d'air alimente en outre un système de conditionnement d'air de l'aéronef.

L'invention concerne également une architecture d'alimentation en air d'un compresseur haute pression de générateur de gaz auxiliaire depuis une cabine pressurisée d'un aéronef, caractérisé en ce qu'elle comprend : un compresseur de charge entrainé en rotation par un arbre de rotation commun assurant une liaison mécanique entre le compresseur haute pression et une turbine haute pression du générateur de gaz auxiliaire et alimenté par une prise d'air extérieur ; une première vanne de régulation montée en sortie du compresseur de charge pour contrôler tout ou partie du débit d'air délivré par le compresseur de charge ; une deuxième vanne de régulation montée en sortie de la cabine pressurisée pour contrôler le débit d'air prélevé dans la cabine pressurisée ; un mélangeur recevant les sorties des première et deuxième vannes de régulation pour ajouter l'air prélevé dans la cabine pressurisée à tout ou partie de l'air délivré par le compresseur de charge ; et une troisième vanne de régulation montée en sortie du mélangeur pour contrôler le débit d'air injecté dans le compresseur haute pression du générateur de gaz auxiliaire.

De préférence, cette architecture d'alimentation en air comprend en outre un autre compresseur de charge également associé au générateur de gaz auxiliaire et une quatrième vanne de régulation montée en sortie de cet autre compresseur de charge pour contrôler tout ou partie du débit d'air délivré par cet autre compresseur de charge au mélangeur recevant en plus des sorties des première et deuxième vannes de régulation, la sortie de cette quatrième vanne de régulation.

Avantageusement, elle comprend en outre une vanne de décharge associée à chacun des compresseurs de charge pour assurer la stabilité de chacun des compresseurs de charge en déchargeant à l'atmosphère tout ou partie de l'air délivré par chacun des compresseurs de charge.

De préférence, elle comprend en outre en sortie de la cabine pressurisée un limiteur de débit pour limiter le débit d'air extrait de la cabine pressurisée.

Avantageusement, le compresseur de charge est relié à un système de conditionnement d'air de l'aéronef et il est prévu en outre en sortie du compresseur de charge une vanne de régulation de débit d'air montée si nécessaire en série avec une vanne d'isolation pour délivrer un débit d'air déterminé à un système de conditionnement d'air de l'aéronef.

De préférence, la troisième vanne de régulation est en outre configurée pour si besoin adapter le débit d'air injecté dans le compresseur haute pression au débit disponible en sortie du mélangeur.

Avantageusement, elle comprend en outre montée en entrée du compresseur haute pression une vanne de sélection pour sélectionner le débit de plus forte pression entre la prise d'air extérieure et la sortie de la troisième vanne de régulation.

De préférence, elle comprend en outre en sortie de la cabine pressurisée une vanne de décharge vers l'atmosphère.

Enfin, l'invention concerne aussi un aéronef comportant une cabine pressurisée, un générateur de gaz auxiliaire et une architecture d'alimentation en air telle que précitée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur les lesquels :
[Fig. 1] la figure 1 illustre schématiquement une architecture d'alimentation en air d'un générateur de gaz auxiliaire selon l'invention, et
[Fig. 2] la figure 2 présente le rapport entre la puissance mécanique extraite et la puissance nominale pour différentes conditions de fonctionnement d'un générateur de gaz auxiliaire selon l'invention.

### Description des modes de réalisation

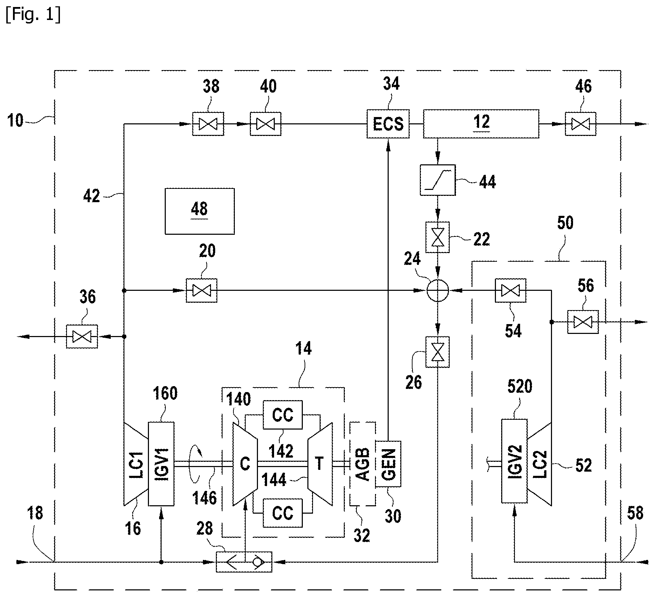

La figure 1 illustre de façon schématique dans un aéronef 10 comportant une cabine pressurisée 12 et un générateur de gaz auxiliaire 14 comportant classiquement un compresseur haute pression 140, une chambre de combustion 142 et une turbine haute pression 144, une architecture d'alimentation en air du compresseur haute pression de ce générateur de gaz auxiliaire conforme à l'invention. Le terme « haute pression » est utilisé dans la présente pour spécifier le compresseur du générateur de gaz auxiliaire, même si ce dernier ne comporte qu'un seul compresseur alimentant en air comprimé la chambre de combustion, et le distinguer ainsi du compresseur de charge défini ci-après et associé au générateur de gaz auxiliaire.

Plus particulièrement, cette architecture comprend : un compresseur de charge 16 associé au générateur de gaz auxiliaire 14 (c'est à dire entrainé en rotation par l'arbre de rotation commun 146 assurant la liaison mécanique compresseur-turbine du générateur de gaz auxiliaire) et alimenté par une prise d'air extérieur 18 ; une première vanne de régulation 20 montée en sortie du compresseur de charge pour contrôler tout ou partie du débit d'air délivré par ce compresseur de charge ; une deuxième vanne de régulation 22 montée en sortie de la cabine pressurisée 12 pour contrôler le débit d'air prélevé dans la cabine pressurisée ; un mélangeur 24 recevant les sorties des première et deuxième vannes de régulation 20, 22 pour ajouter l'air prélevé dans la cabine pressurisée 12 à tout ou partie de l'air délivré par le compresseur de charge 16 ; et une troisième vanne de régulation 26 montée en sortie du mélangeur 24 pour contrôler le débit d'air injecté dans le compresseur haute pression 140 du générateur de gaz auxiliaire 14.

La troisième vanne de régulation 26 permet si cela est nécessaire d'adapter le débit d'air injecté dans le compresseur haute pression 140 du générateur de gaz au débit disponible en sortie du mélangeur 24 par ajustement de la pression d'ingestion.

Le compresseur de charge 16 est muni en entrée de vannes de guidage 160 (IGV pour Inlet Guide Vanes) pour réguler son fonctionnement et assurer son alimentation depuis la prise d'air extérieur 18 qui alimente également en air directement le compresseur haute pression via une vanne de sélection 28 recevant d'une part cet air extérieur sur une première entrée et d'autre part l'air sortant de la troisième vanne de régulation 26 sur une seconde entrée (on notera que le compresseur haute pression est ici dépourvu de vannes de guidage). Cette vanne sélectionne le débit de plus forte pression entre la prise d'air extérieure et la sortie de la troisième vanne de régulation.

Une génératrice électrique 30 est montée sur l'arbre de rotation commun 146, éventuellement via une boîte de réduction 32, pour délivrer de la puissance électrique à divers systèmes électriques de l'aéronef et notamment à un système de conditionnement d'air 34 (ECS pour Environmental Control System) de l'aéronef assurant la ventilation de la cabine pressurisée 12.

En aval du compresseur de charge est monté un ensemble de vannes permettant d'assurer différentes fonctions de l'architecture. Tout d'abord, une vanne de décharge 36 (SCV ou Surge Control Valve) destinée à assurer la stabilité du compresseur de charge 16 en déchargeant à l'atmosphère tout ou partie de l'air délivré par ce compresseur de charge. Ensuite, le compresseur de charge étant relié au système de conditionnement d'air, il peut être prévu, lorsque cela est nécessaire au système de conditionnement d'air, une vanne de régulation de débit d'air 40 (ABRV pour Aircraft Bleed Regulation Valve) pouvant être montée en série avec une vanne d'isolation 38 (LCV pour Load Control Valve) pour délivrer un débit d'air déterminé au système de conditionnement d'air 34. Ces vannes ainsi que la première vanne de régulation 20 (RCV pour Recirculation Control Valve) sont montées sur une même conduite 42 émanant du compresseur de charge 16.

En amont de la deuxième vanne de régulation 22 donc à une sortie de la cabine pressurisée 12, il peut être prévu un limiteur de débit 44 pour limiter le débit d'air extrait de cette cabine pressurisée dont le contenu en air peut par ailleurs être déchargé vers l'atmosphère si nécessaire par une vanne de décharge 46 placée à une autre sortie de la cabine pressurisée.

L'ensemble de ces vannes est bien entendu contrôlé depuis un module de commande 48 qui agit sur leur ouverture en fonction des différentes phases de vol de l'aéronef, comme il sera maintenant explicité plus avant.

Dans les applications où le débit d'air issu du compresseur de charge 16 s'avère insuffisant pour alimenter le compresseur haute pression 140 (par exemple dans le cas de jet d'affaires), il peut être ajouté un débit d'air additionnel d'une source supplémentaire d'alimentation en air 50, comportant un autre compresseur de charge 52 également associé au générateur de gaz auxiliaire 14 via l'arbre de rotation commun 146, et un ensemble de vannes dont le contrôle se fait de manière identique à celui du premier compresseur de charge 16 via le module de commande 48.

Plus particulièrement, une vanne de régulation supplémentaire 54 est montée en sortie de ce compresseur de charge pour contrôler tout ou partie du débit d'air délivré au mélangeur 24 qui outre les sorties des première et deuxième vannes de régulation 20, 22 recevra la sortie de cette vanne de régulation supplémentaire.

Comme le premier compresseur de charge 16, ce compresseur de charge supplémentaire 52 est muni en entrée de vannes de guidage 520 pour réguler son fonctionnement et assurer son alimentation depuis une prise d'air extérieur 58 qui peut être la même que celle du premier. De même, une vanne de décharge 56 est prévue pour assurer la stabilité de ce compresseur de charge supplémentaire 52 en déchargeant à l'atmosphère tout ou partie de l'air qu'il délivre.

Le fonctionnement de cette architecture d'alimentation en air est le suivant. Dans la majorité des applications actuelles des générateurs de puissance auxiliaire (APU), celui-ci ne fournit en vol que de la puissance mécanique (et de la puissance électrique via la génératrice 30), et le prélèvement d'air pour le système de conditionnement d'air (ECS 34) se fait sur les moteurs principaux de l'aéronef (les vannes 38 et 40 sont alors fermées).

Avec la présente invention, l'APU comporte un compresseur de charge 16 associé au générateur de gaz et l'air chaud issu de ce compresseur de charge est détourné vers le mélangeur 24 qui le mélange avec l'air plus froid issu de la cabine pressurisée 12. A titre d'exemple, la température de l'air chaud pourrait être voisine de 450K, alors que la température de l'air plus froid resterait inférieure à 400K. Toutefois, moyennant les vannes d'isolation 38 et de régulation 40, le compresseur de charge peut également fournir de l'énergie pneumatique au système de conditionnement d'air 34, afin de répartir le débit disponible entre ce système 34 et le compresseur haute pression 140 lorsque cela est nécessaire.

L'intérêt de cette solution est d'alimenter le compresseur haute pression avec de l'air pressurisé et avec un débit suffisant pour ne pas sur-contraindre le fonctionnement du générateur de gaz auxiliaire. De plus, en fonctionnement nominal, le générateur de gaz auxiliaire opère alors sur une plage de fonctionnement réduite (la température et la pression cabine étant régulées sur toutes les phases de vol) pour laquelle il peut être optimisé. Cette solution ne demande pas de rajouter des composants majeurs aux architectures actuelles et utilise un composant aujourd'hui inutilisé en vol (le compresseur de charge), ce qui facilite son installation. Le compresseur de charge fournira toujours un débit maximal, dans la limite de son domaine de stabilité et d'un taux de compression compatible avec la pression de la cabine, un plus grand débit recirculé permettant d'optimiser les performances en vol.

Au sol et à basse altitude, les vannes de régulation 20, 22 et 26 sont fermées, le compresseur haute pression 140 est alimenté en air extérieur depuis la prise 18 via la vanne de sélection 28 et le générateur de gaz auxiliaire 14 fonctionne dans un mode « classique », pouvant alors fournir une puissance électrique et une puissance pneumatique nominale via son compresseur de charge.

En vol et en fonctionnement nominal, les vannes de régulation 20 et 26 sont ouvertes ainsi que la vanne de régulation 22 connectant la cabine pressurisée au générateur de gaz auxiliaire 14, le compresseur haute pression 140 est alimenté avec un mélange d'air cabine et d'air issu du compresseur de charge selon la sélection opérée à la plus forte pression par la vanne de sélection 28, et les débits sont pilotés par l'ouverture des vannes afin de maintenir la pression cabine à un niveau acceptable. Il est à noter qu'en vol, le système de conditionnement d'air 34 n'est généralement pas alimenté en air sous pression par le compresseur de charge, puisque cet air sous pression est prélevé sur le ou les moteurs de l'aéronef. De ce fait, la vanne d'isolation 38 et la vanne de régulation de débit d'air 40 resteront généralement fermées en vol, ce qui permet d'alimenter le mélangeur 24 avec la totalité du débit d'air fourni par le compresseur de charge 16, via la vanne de régulation 20. La vanne de guidage 160 est également pilotée afin que le compresseur de charge 16 puisse fournir le débit requis à une pression compatible avec l'écoulement issu de la cabine, des performances optimales pouvant être obtenues lorsque le compresseur de charge fournit un débit maximal au compresseur haute pression, sa capacité de débit étant fonction de l'altitude.

En cas de dépressurisation cabine, la vanne de régulation 22 est commandée pour se fermer ou se ferme automatiquement et la cabine est isolée du circuit de recirculation d'air depuis le compresseur de charge. Le générateur de gaz auxiliaire14 est alors alimenté depuis la prise d'air extérieur 18, et peut générer de la puissance électrique et/ou pneumatique de manière nominale.

En cas d'extinction du générateur de gaz auxiliaire, la vanne de régulation 20 se ferme et l'air cabine est réinjecté dans le compresseur afin de faciliter le rallumage du générateur de gaz auxiliaire 14 quelle que soit l'altitude.

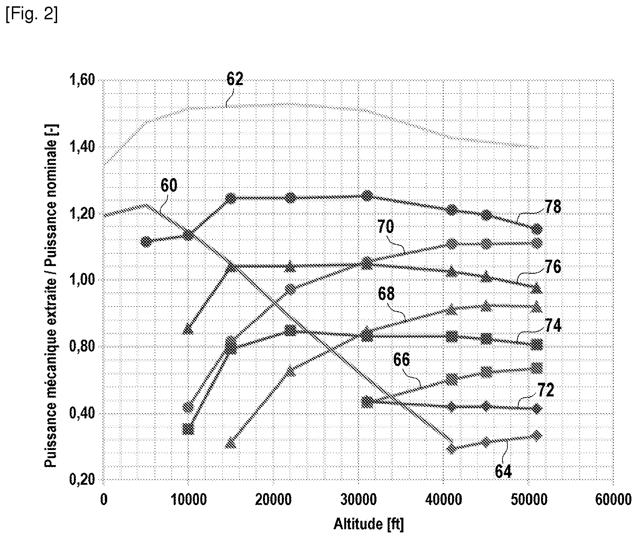

La figure 2 présente un exemple du rapport entre la puissance mécanique extraite du générateur de gaz auxiliaire et de sa puissance nominale en régime stabilisé, pour différentes altitudes et selon quatre architectures distinctes : une architecture "classique" où le compresseur haute pression est alimenté uniquement en air extérieur (courbe 60), une architecture où le compresseur haute pression est alimenté uniquement et sans limitation de débit par de l'air issu de la cabine (courbe 62), une architecture où le compresseur haute pression est alimenté uniquement par de l'air cabine dont le débit est saturé entre 0.4 et 1.0 kg/s (courbes 64, 66, 68, 70) et une architecture conforme à l'invention où le compresseur haute pression est alimenté par de l'air cabine dont le débit est saturé entre 0.4 et 1.0 kg/s (courbes 72, 74, 76, 78) et mélangé à de l'air issu du compresseur de charge (les courbes intermédiaires correspondent à des débits de 0.6 et 0.8 kg/s).

On peut noter que l'apport du compresseur de charge permet d'augmenter la puissance mécanique pouvant être extraite du générateur de gaz auxiliaire, la puissance prélevée par le compresseur de charge sur l'arbre de rotation étant compensée par le débit qu'il apporte (diminuant la contrainte sur le fonctionnement du générateur de gaz auxiliaire). Pour les différents niveaux de débit d'air cabine retenus, on peut également noter un apport de puissance disponible correspondant à une diminution de la consommation spécifique du générateur de gaz auxiliaire.

La comparaison des puissances extraites donne l'altitude de transition d'un mode « classique » (alimentation par de l'air extérieur - courbe 60) au mode d'alimentation de l'invention (alimentation par de l'air cabine mélangé à de l'air recirculé du compresseur de charge - courbes 72-78). Dans le cas illustré, la transition se fait entre environ 3km (10000ft --cas d'un débit d'air cabine de 1.0 kg/s) et 10km (35000 ft - cas d'un débit d'air cabine de 0.4 kg/s). Dans le cas d'un fonctionnement nominal avec un débit d'air cabine disponible de 1.0 kg/s (correspondant à une application à des avions moyen-courriers), on obtient ainsi une puissance mécanique disponible quasi constante pour des altitudes entre 0 et environ 15km (51000 ft), gommant ainsi l'effet pression-altitude sur la fourniture de puissance par la turbine à gaz.

On notera que l'ajout d'un ou plusieurs échangeurs thermiques peut être envisagé pour augmenter la puissance générée par le compresseur de charge, et diminuer sa consommation. En particulier, un échangeur thermique (non représenté) peut être placé en amont de la vanne de régulation 20 et/ou en aval du mélangeur 24 entre l'air cabine et l'air issu du compresseur de charge. La source chaude couplée pourra être, par exemple, le circuit d'huile moteur.

De même, l'utilisation de batteries (non représentées) en aval de la génératrice électrique 30 peut aussi être envisagée afin de dimensionner le générateur de gaz auxiliaire sur une charge moyenne, et donc d'optimiser son fonctionnement sur un point nominal.

## Revendications

1. Procédé d'alimentation en air d'un compresseur haute pression (140) de générateur de gaz auxiliaire (14) depuis une cabine pressurisée (12) d'un aéronef, un compresseur de charge (16) étant entrainé en rotation par un arbre de rotation commun (146) assurant une liaison mécanique entre le compresseur haute pression et une turbine haute pression (144) du générateur de gaz auxiliaire, à un premier débit d'air extrait de la cabine étant ajouté un deuxième débit d'air issu du compresseur de charge (16).

2. Procédé d'alimentation en air selon la revendication 1, **caractérisé en ce qu'**un troisième débit d'air issu d'un autre compresseur de charge (52) également entrainé en rotation par l'arbre de rotation commun (146) du générateur de gaz auxiliaire (14) est ajouté aux premier et deuxième débits d'air pour alimenter le compresseur haute pression (140).

3. Procédé d'alimentation en air selon la revendication 1, **caractérisé en ce que** le premier débit d'air extrait de la cabine est limité à une valeur maximale déterminée.

4. Procédé d'alimentation en air selon l'une quelconque des revendications 1 à 3, **caractérisé en ce que** le deuxième débit d'air alimente en outre un système de conditionnement d'air de l'aéronef (34).

5. Architecture d'alimentation en air d'un compresseur haute pression (140) de générateur de gaz auxiliaire (14) depuis une cabine pressurisée (12) d'un aéronef, l'architecture d'alimentation en air comprenant un compresseur de charge (16) alimenté par une prise d'air extérieur (18), un arbre de rotation commun (146) pour assurer une liaison mécanique entre le compresseur haute pression (140) et une turbine haute pression (144) du générateur de gaz auxiliaire, et un mélangeur (24) pour ajouter d'air prélevé dans la cabine pressurisée à l'air délivré par le compresseur de charge pour injection dans le compresseur haute pression du générateur de gaz auxiliaire, **caractérisée en ce que** le compresseur de charge est entrainé en rotation par l'arbre de rotation commun (146); et **en ce que** l'architecture d"alimentation comprend en outre une première vanne de régulation (20) montée en sortie du compresseur de charge pour contrôler tout ou partie du débit d'air délivré par le compresseur de charge ; une deuxième vanne de régulation (22) pour être montée en sortie de la cabine pressurisée pour contrôler le débit d'air prélevé dans la cabine pressurisée ; le mélangeur (24) recevant les sorties des première et deuxième vannes de régulation pour ajouter l'air prélevé dans la cabine pressurisée à tout ou partie de l'air délivré par le compresseur de charge ; et une troisième vanne de régulation (26) montée en sortie du mélangeur pour contrôler le débit d'air injecté dans le compresseur haute pression du générateur de gaz auxiliaire.

6. Architecture d'alimentation en air selon la revendication 5, **caractérisée en ce qu'**elle comprend en outre un autre compresseur de charge (52) associé de la même manière au générateur de gaz auxiliaire (14) et une quatrième vanne de régulation (54) montée en sortie de cet autre compresseur de charge pour contrôler tout ou partie du débit d'air délivré par cet autre compresseur de charge au mélangeur (24) recevant en plus des sorties des première (20) et deuxième (22) vannes de régulation, la sortie de cette quatrième vanne de régulation (54).

7. Architecture d'alimentation en air selon la revendication 5 ou la revendication 6, **caractérisée en ce qu'**elle comprend en outre une vanne de décharge (36, 56) associée à chacun des compresseurs de charge (16, 52) pour assurer la stabilité de chacun des compresseurs de charge en déchargeant à l'atmosphère tout ou partie de l'air délivré par chacun des compresseurs de charge.

8. Architecture d'alimentation en air selon l'une quelconque des revendications 5 à 7, **caractérisée en ce qu'**elle comprend en outre en sortie de la cabine pressurisée un limiteur de débit (44) pour limiter le débit d'air extrait de la cabine pressurisée.

9. Architecture d'alimentation en air selon l'une quelconque des revendications 5 à 8, **caractérisée en ce que** le compresseur de charge (16) est relié à un système de conditionnement d'air (34) de l'aéronef.

10. Architecture d'alimentation en air selon la revendication 9, **caractérisée en ce qu'**elle comprend en outre en sortie du compresseur de charge une vanne de régulation de débit d'air (40) montée si nécessaire en série avec une vanne d'isolation (38) pour délivrer un débit d'air déterminé au système de conditionnement d'air (34) de l'aéronef.

11. Architecture d'alimentation en air selon l'une quelconque des revendications 5 à 10, **caractérisée en ce que** la troisième vanne de régulation (26) est en outre configurée pour si besoin adapter le débit d'air injecté dans le compresseur haute pression (140) au débit disponible en sortie du mélangeur (24).

12. Architecture d'alimentation en air selon l'une quelconque des revendications 5 à 11, **caractérisée en ce qu'**elle comprend en outre montée en entrée du compresseur haute pression une vanne de sélection (28) pour sélectionner le débit de plus forte pression entre la prise d'air extérieure et la sortie de la troisième vanne de régulation.

13. Architecture d'alimentation en air selon l'une quelconque des revendications 5 à 12, **caractérisée en ce qu'**elle comprend en outre en sortie de la cabine pressurisée une vanne de décharge vers l'atmosphère (46).

14. Aéronef comportant une cabine pressurisée, un générateur de gaz auxiliaire et une architecture d'alimentation en air selon l'une quelconque des revendications 5 à 13.

## Patentansprüche

1. Luftversorgungsverfahren eines Hochdruckkompressors (140) eines Hilfsgasgenerators (14) mit Luft aus einer Druckkabine (12) eines Luftfahrzeugs, ein Ladekompressor (16) durch eine gemeinsame Drehwelle (146) in Drehung versetzt wird, die eine mechanische Verbindung zwischen dem Hochdruckkompressor und einer Hochdruckturbine (144) des Hilfsgasgenerators herstellt, wobei zu einem ersten Luftdurchsatz, der aus der Kabine entnommen wird, ein zweiter Luftdurchsatz hinzugefügt wird, der von dem Ladekompressor (16) stammt.

2. Luftversorgungsverfahren nach Anspruch 1, **dadurch gekennzeichnet, dass** ein dritter Luftdurchsatz, der aus einem weiteren Ladekompressor (52) stammt, der auch von der gemeinsamen Drehwelle (146) des Hilfsgasgenerators (14) in Drehung versetzt wird, zu dem ersten und dem zweiten Luftdurchsatz hinzugefügt wird, um den Hochdruckkompressor (140) zu versorgen.

3. Luftversorgungsverfahren nach Anspruch 1, **dadurch gekennzeichnet, dass** der erste Luftdurchsatz, der aus der Kabine entnommen wird, auf einen bestimmten Maximalwert begrenzt ist.

4. Luftversorgungsverfahren nach einem der Ansprüche 1 bis 3, **dadurch gekennzeichnet, dass** der zweite Luftdurchsatz ferner eine Klimaanlage des Luftfahrzeugs (34) versorgt.

5. Luftversorgungsarchitektur eines Hochdruckkompressors (140) eines Hilfsgasgenerators (14) aus einer Druckkabine (12) eines Luftfahrzeugs, die Luftversorgungsarchitektur umfassend einen Ladekompressor (16), der von einem Außenlufteinlass (18) versorgt wird, eine gemeinsame Drehwelle (146), um eine mechanische Verbindung zwischen dem Hochdruckkompressor (140) und einer Hochdruckturbine (144) des Hilfsgasgenerators herzustellen, und einen Mischer (24) zum Hinzufügen von Luft, die aus der Druckkabine entnommen wird, zu der Luft, die von dem Ladekompressor zugeführt wird, zur Einspritzung in den Hochdruckkompressor des Hilfsgasgenerators, **dadurch gekennzeichnet, dass** der Ladekompressor durch die gemeinsame Drehwelle (146) in Drehung versetzt wird;
und dass die Versorgungsarchitektur ferner ein erstes Regelventil (20), das am Ausgang des Ladekompressors montiert ist, um den gesamten oder einen Teil des von dem Ladekompressor zugeführten Luftdurchsatzes zu steuern; ein zweites Regelventil (22), um am Ausgang der Druckkabine montiert zu werden, um den Durchsatz der aus der Druckkabine entnommenen Luft zu steuern; den Mischer (24), der die Ausgänge des ersten und des zweiten Regelventils erhält, um die aus der Druckkabine entnommene Luft zu der gesamten oder einem Teil der von dem Ladekompressor zugeführten Luft hinzuzufügen; und ein drittes Regelventil (26), das am Ausgang des Mischers montiert ist, um den Luftdurchsatz zu steuern, der in den Hochdruckkompressor des Hilfsgasgenerators eingespritzt wird, umfasst.

6. Luftzufuhrarchitektur nach Anspruch 5, **dadurch gekennzeichnet, dass** sie ferner einen weiteren Ladekompressor (52), der auf gleiche Weise mit dem Hilfsgasgenerator (14) assoziiert ist, und ein viertes Regelventil (54), das am Ausgang dieses weiteren Ladekompressors montiert ist, um die gesamte oder einen Teil des Luftdurchsatzes zu regulieren, die von diesem weiteren Ladekompressor dem Mischer (24) zugeführt wird, der zusätzlich zu den Ausgängen des ersten (20) und des zweiten (22) Regelventils den Ausgang dieses vierten Regelventils (54) erhält, umfasst.

7. Luftversorgungsarchitektur nach Anspruch 5 oder 6, **dadurch gekennzeichnet, dass** sie ferner ein Entlastungsventil (36, 56) umfasst, das mit jedem der Ladekompressoren (16, 52) assoziiert ist, um die Stabilität von jedem der Ladekompressoren zu gewährleisten, indem die gesamte oder ein Teil der von jedem der Ladekompressoren zuführten Luft in die Atmosphäre abgelassen wird.

8. Luftversorgungsarchitektur nach einem der Ansprüche 5 bis 7, **dadurch gekennzeichnet, dass** sie ferner am Ausgang der Druckkabine einen Durchsatzbegrenzer (44) zum Begrenzen des Luftdurchsatzes umfasst, der aus der Druckkabine entnommen wird.

9. Luftversorgungsarchitektur nach einem der Ansprüche 5 bis 8, **dadurch gekennzeichnet, dass** der Ladekompressor (16) mit einer Klimaanlage (34) des Luftfahrzeugs verbunden ist.

10. Luftversorgungsarchitektur nach Anspruch 9, **dadurch gekennzeichnet, dass** sie ferner am Ausgang des Ladekompressors ein Luftdurchsatzregelventil (40) umfasst, das bei Bedarf in Reihe mit einem Absperrventil (38) montiert ist, um einen bestimmten Luftdurchsatz an die Klimaanlage (34) des Luftfahrzeugs zuzuführen.

11. Luftversorgungsarchitektur nach einem der Ansprüche 5 bis 10, **dadurch gekennzeichnet, dass** das dritte Regelventil (26) ferner konfiguriert ist, um bei Bedarf den in den Hochdruckkompressor (140) eingespritzten Luftdurchsatz an den am Ausgang des Mischers (24) verfügbaren Luftdurchsatz anzupassen.

12. Luftversorgungsarchitektur nach einem der Ansprüche 5 bis 11, **dadurch gekennzeichnet, dass** sie ferner ein Auswahlventil (28) zum Auswählen des Durchsatzes mit dem höheren Druck zwischen der Außenluftzufuhr und dem Ausgang des dritten Regelventils umfasst, das am Eingang des Hochdruckkompressors montiert ist.

13. Luftversorgungsarchitektur nach einem der Ansprüche 5 bis 12, **dadurch gekennzeichnet, dass** sie ferner am Ausgang der Druckkabine ein Ablassventil zur Atmosphäre (46) umfasst.

14. Luftfahrzeug, umfassend eine Druckkabine, einen Hilfsgasgenerator und eine Luftversorgungsarchitektur nach einem der Ansprüche 5 bis 13.

## Claims

1. A method for supplying air to a high-pressure compressor (140) of an auxiliary gas generator (14) from a pressurized cabin (12) of an aircraft, a load compressor (16) being rotationally driven by a common rotation shaft (146) providing a mechanical coupling between the high-pressure compressor and a high-pressure turbine (144) of the auxiliary gas generator, a second air flow coming from the load compressor (16) being added to a first air flow extracted from the cabin.

2. The method for supplying air as claimed in claim 1, **characterized in that** a third air flow coming from another load compressor (52) also rotationally driven by the common rotation shaft (146) of the auxiliary gas generator (14) is added to the first and second air flows to supply the high-pressure compressor (140).

3. The method for supplying air as claimed in claim 1, **characterized in that** the first air flow extracted from the cabin is limited to a given maximum value.

4. The method for supplying air as claimed in any of claims 1 to 3, **characterized in that** the second air flow further supplies an air conditioning system of the aircraft (34).

5. An architecture for supplying air to a high-pressure compressor (140) of an auxiliary gas generator (14) from a pressurized cabin (12) of an aircraft, comprising load compressor (16) supplied by an outside air intake (18), a common rotation shaft (146) providing a mechanical coupling between the high-pressure compressor (140) and a high-pressure turbine (144) of the auxiliary gas generator and a mixer (24) to add the air drawn from inside the pressurized cabin to the air delivered by the load compressor to be injected into the high-pressure compressor of the auxiliary gas generator,
**characterized in that** the load compressor is rotationally driven by a common rotation shaft (146); and **in that** the architecture for supplying air further comprises a first regulation valve (20) assembled at the outlet of the load compressor to control all or part of the air flow delivered by the load compressor; a second regulation valve (22) to be assembled at the outlet of the pressurized cabin to control the air flow drawn from inside the pressurized cabin; the mixer (24) receiving the outputs of the first and second regulation valves to add the air drawn from inside the pressurized cabin to all or part of the air delivered by the load compressor; and a third regulation valve (26) assembled at the outlet of the mixer to control the air flow injected into the high-pressure compressor of the auxiliary gas generator.

6. The architecture for supplying air as claimed in claim 5, **characterized in that** it further comprises another load compressor (52) also associated with the auxiliary gas generator (14) and a fourth regulation valve (54) assembled at the outlet of this other load compressor to control all or part of the air flow delivered by this other load compressor to the mixer (24) receiving, in addition to the outputs of the first (20) and second (22) regulation valves, the output of this fourth regulation valve (54).

7. The architecture for supplying air as claimed in claim 5 or claim 6, **characterized in that** it further comprises a bleed valve (36, 56) associated with each of the load compressors (16, 52) to ensure the stability of each of the load compressors by bleeding into the atmosphere all or part of the air delivered by each of the load compressors.

8. The architecture for supplying air as claimed in any of claims 5 to 7, **characterized in that** it further comprises at the outlet of the pressurized cabin a flow limiter (44) to limit the air flow extracted from the pressurized cabin.

9. The architecture for supplying air as claimed in any of claims 5 to 8, **characterized in that** the load compressor (16) is connected to an air conditioning system (34) of the aircraft.

10. The architecture for supplying air as claimed in claim 9, **characterized in that** it further comprises at the outlet of the load compressor an air flow regulation valve (40) assembled, if necessary, in series with a shutoff valve (38) to deliver a given air flow to an air conditioning system (34) of the aircraft.

11. The architecture for supplying air as claimed in any of claims 5 to 10, **characterized in that** the third regulation valve (26) is further configured to, if necessary, adapt the air flow injected into the high-pressure compressor (140) to the flow available at the outlet of the mixer (24).

12. The architecture for supplying air as claimed in any of claims 5 to 11, **characterized in that** it further comprises, assembled at the inlet of the high-pressure compressor a selector valve (28) to select the flow with the highest pressure between the outside air intake and the outlet of the third regulation valve.

13. The architecture for supplying air as claimed in any of claims 5 to 12, **characterized in that** it further comprises at the outlet of the pressurized cabin a bleed valve bleeding into the atmosphere (46).

14. An aircraft including a pressurized cabin, an auxiliary gas generator and an architecture for supplying air as claimed in any of claims 5 to 13.
